(19) Europäisches Patentamt
European Patent Office
Office européen des brevets

(11) Numéro de publication: **0 134 173 A1**

(12) # DEMANDE DE BREVET EUROPEEN

(21) Numéro de dépôt: **84401626.1**

(22) Date de dépôt: **03.08.84**

(51) Int. Cl.⁴: **C 09 K 7/06**

(30) Priorité: **17.08.83 FR 8313368**

(43) Date de publication de la demande: **13.03.85 Bulletin 85/11**

(84) Etats contractants désignés: **GB NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Aurenge, Jacques, La Ferlatière, F-69370 St. Didier au Mont d'Or (FR)**

(74) Mandataire: **Tavernier, Colette et al, RHONE POULENC RECHERCHES Service Brevets Chimie et Polymères 25, Quai Paul Doumer, F-92408 Courbevoie Cedex (FR)**

(54) **Compositions adjuvantes pour fluides de forage.**

(57) Compositions pour fluides de forage à émulsion inverse de type eau-dans-huile.

Les compositions sont obtenues en mélangeant 10 à 40% d'au moins un composé phénolique, 16 à 80% d'un émulsifiant à base d'imidazoline et 10 à 60% d'un hydrocarbure paraffinique.

EP 0 134 173 A1

COMPOSITIONS ADJUVANTES POUR FLUIDES DE FORAGE

La présente invention a pour objet des compositions adjuvantes pour fluides de forage à émulsion inverse du type eau -dans huile-. Elle concerne également les fluides ou boues de forage à émulsion inverse contenant les dites compositions ainsi que leur utilisation notamment pour le forage offshore des puits de pétrole.

On sait que, dans le forage des puits de pétrole ou de gaz naturels par le procédé rotary, on utilise un fluide à base d'eau ou à base d'huile qui a notamment pour rôle d'assurer la remontée des déblais formés sur le front de taille. Ce fluide, qui est introduit sous pression par l'axe du train de tiges, traverse la tête du trépan puis remonte dans l'espace annulaire limité par ledit train de tiges et le trou de forage lui-même, assure simultanément d'autres fonctions qui sont notamment le refroidissement de la tête du trépan, l'étanchéité des parois du puits, l'équilibre des pressions internes par la pression hydrostatique.

Les fluides de forage à émulsion inverse eau dans huile sont fréquemment utilisés en raison de certains avantages sur les fluides à base d'eau. Ils permettent notamment de forer dans de meilleures conditions les formations géologiques contenant des argiles gonflantes. Les émulsions inverses contiennent généralement environ 10 à 40 % d'eau et 60 à 90 % d'huile Diesel, un émulsifiant, un réducteur de filtrat et des charges. L'emploi d'huile Diesel entraine des problèmes d'environnement notamment dans le cas des forages marins où les déblais qui sont ramenés à la surface et criblés de la boue ne peuvent être rejetés directement dans l'océan à cause de la pollution qui en résulterait. Dans le cas des forages sur terre ferme, des problèmes de contamination se posent aussi lors de la traversée de nappes phréatiques.

Des compositions pour fluides de forage à émulsion inverse jouant simultanément le rôle d'émulsifiant et de réducteur de filtrat ont été décrites dans le brevet FR A 2 123 225. Ces compositions confèrent aux fluides qui les contient une excellente stabilité même aux températures élevées et une capacité de filtration de la phase aqueuse nulle mais elles présentent quelques inconvénients, en particulier leur difficulté de mise en oeuvre dûe à leur viscosité et point de gel élevé, et la toxicité engendrée par la forte

concentration en diphénols.

La présente invention a pour but de remédier à ces inconvénients et de fournir une composition améliorée pour fluide de forage du type émulsion inverse qui soit d'une préparation et d'un emploi propre et facile.

Les compositions selon l'invention sont caractérisées en ce qu'elles sont constituées d'une phase liquide homogène obtenue en mélangeant 10 à 40 % en poids d'au moins un composé phénolique, 16 à 80 % en poids d'un émulsifiant à base d'imidazoline de formule :

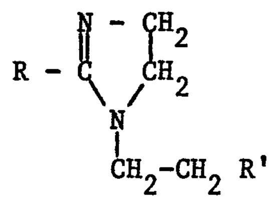

(I)

dans laquelle R représente un radical alkyle ou alcényle linéaire ou ramifié ayant 12 à 30, de préférence 16 à 20 atomes de carbone, ou un radical alicyclique et R' représente le groupe $-NH_2$ ou $-OH$ et 10 à 60 % en poids d'un hydrocarbure paraffinique, le rapport en poids entre le(s) composé(s) phénolique(s) et l'émulsifiant étant compris entre 1/9 et 1,5/1.

Comme composés phénoliques, on peut utiliser tout composé benzénique porteur d'au moins un groupement hydroxyle, substitué le cas échéant par des restes alkyles ; à ce titre, on peut citer, à titre non limitatif les monophénols comme les cresols, les xylenols; les diphénols et alkyldiphénols comme le pyrocatechol, le 3-méthylpyrocatechol, le 4-méthylpyrocatechol, le 3-éthylpyrocatechol, l'hydroquinone, les méthyl- et diméthylhydroquinones, le résorcinol; les triphénols et alkyltriphénols comme le pyrogallol, le phloroglucinol, le 5-méthylpyrogallol etc... ainsi que leurs mélanges entre eux. On peut encore avoir recours à des produits bruts comme les creosotes. Selon un aspect particulier de l'invention, on met en oeuvre des résidus de distillation du bois pauvres en méthylcatechol en association avec 10 à 20 % de pyrocatechol.

Les imidazolines entrant en jeu dans le cadre de l'invention sont des produits connus en eux-mêmes qui sont généralement obtenus par l'action d'un acide convenable tel que l'acide oléique, stéarique, les acides gras du suif, les acides naphténiques,

résiniques, le tall-oil, etc. sur une polyamine telle que la diéthylène-triamine, l'aminoéthyl-éthanolamine, la triéthylène-pentamine.

Selon un aspect particulier de l'invention, les imidazolines de formule I sont utilisées en mélange avec des mono- et/ou diamides de formules

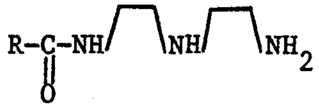

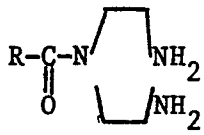

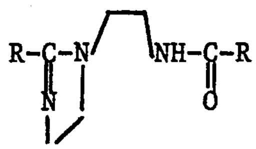

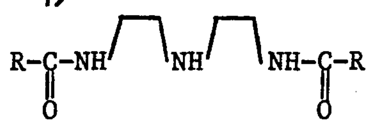

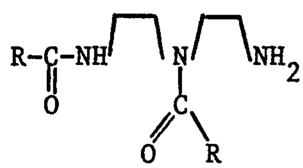

Dans ces mélanges, la quantité de mono et/ou diamides est généralement inférieure à 30 % du poids du mélange total (Imidazoline + amides).

L'hydrocarbure peut être choisi parmi les paraffines et isoparaffines liquides et leurs mélanges liquides, les fractions raffinées d'huile minérale et les coupes d'hydrocarbures désaromatisées contenant de préférence moins de 5 % en poids d'hydrocarbures aromatiques et dont le point d'ébullition est préférentiellement compris entre 200 et 250° C selon la Norme ASTM D86.

Les compositions adjuvantes peuvent être préparées par simple mélange de leurs constituants. A température ambiante l'intéraction chimique exothermique entre l'émulsifiant à base d'imidazoline et les phénols conduit à la formation d'un composé liquide monophasique stable constitué d'un sel d'amine, éventuellement de phénols,

d'imidazoline ou d'amides en excès, en solution dans l'hydrocarbure paraffinique.

Les compositions adjuvantes selon l'invention restent liquides et présentent une bonne coulabilité à des températures voisines de 0°C permettant une mise en oeuvre aisée même dans les pays froids. Elles offrent en outre l'avantage de pouvoir réaliser, en fonction de la quantité de phénols utilisée pour leur préparation, des boues à filtrat normal ou à filtrat relaché, tout en maintenant une capacité de filtration de la phase aqueuse pratiquement nulle. Un filtrat dit "normal" correspond à la propriété de la boue de former un cake peu perméable le long du train de tiges ce qui a pour effet de limiter les pertes de liquide de la boue de forage. Un filtrat dit "relaché" permet une imbibition plus importante de la formation géologique au niveau de l'outil de coupe, facilitant ainsi le forage. Dans les deux cas, le liquide de filtration dans la formation géologique doit être exempt d'eau.

Ce concentrat est normalement ajouté à une huile non polluante pour former la phase huileuse de l'émulsion inverse, en une quantité comprise entre 1 et 10 %, de préférence entre 3 et 7 % en volume du concentrat et 90 à 99 %, de préférence 93 à 97 % en volume d'huile. L'huile non polluante peut être choisie parmi les hydrocarbures constitutifs du concentrat.

La phase aqueuse peut être formée simplement par de l'eau ou, de préférence, par une solution aqueuse de chlorure de sodium ou toute saumure contenant, en outre, du chlorure de calcium et éventuellement d'autres sels de métaux alcalino-terreux.

Le rapport entre la phase huileuse et la phase aqueuse, exprimé en volume peut varier dans de larges limites telles que 95/5 à 60/40.

Par ailleurs, il peut être utile d'associer aux compositions de l'invention des réducteurs de filtrat de type classique, tels que des acides gras et notamment des acides gras à base de suintine, oléine, des acides résiniques, des savons métalliques de ces acides, du tall-oil, des lécithines, etc.

La proportion de réducteur de filtrat complémentaire peut être comprise entre 0,2 et 2 parties en poids pour 100 parties en volume des deux phases.

Les boues de forage à émulsion inverse contiennent en outre des adjuvants usuels tels que des composés basiques comme la chaux, des matériaux de lestage comme le sulfate de baryum finement divisé, le carbonate de calcium, de l'argile, ou tout autre matériau qui permet de conférer au produit final la viscosité et/ou la densité recherchée.

En pratique, pour préparer ces fluides, on ajoute la phase aqueuse à la phase huileuse qui contient les compositions d'adjuvants selon l'invention et l'on forme l'émulsion inverse par agitation du mélange pendant un temps convenable. Le composé basique et le réducteur de filtrat classique, s'ils sont utilisés, sont incorporés à un stade quelconque de la préparation, c'est-à-dire avant ou après la formation de l'émulsion. Le réducteur de filtrat est généralement introduit dans la composition adjuvante elle-même. Les charges sont généralement introduites en fin d'opération.

Les huiles paraffiniques que l'on met en oeuvre dans la présente invention ont pour avantage d'être non polluantes. De plus, l'emploi de telles huiles permet, de façon inattendue, de séparer aisément les déblais, facilitant le traitement mécanique de la boue et permettant d'éviter la nécessité d'une installation de retraitement, de lavage complémentaire ou d'évacuation à terre des déblais séparés. Cette propriété d'obtention de déblais propres et rejetables dans l'océan dans le cas des forages offshore est probablement liée à la nature paraffinique de l'hydrocarbure mais son mécanisme exact n'a pas été élucidé.

Les exemples ci-après sont donnés à titre illustratif et non limitatif de l'invention.

Sauf indication contraire, les parties sont exprimées en volume.

On a déterminé les propriétés rhéologiques des émulsions contenant les compositions adjuvantes selon l'invention. Les viscosités apparente et plastique, l'effort de cisaillement ou "yield value" ainsi que les résistances du gel initial ($gel_0$) et du gel à 10 minutes ($gel_{10}$) sont mesurées à l'aide d'un viscosimètre Fann ou Baroid à la température de 60°C. La stabilité de l'émulsion a été estimée par la tension de rupture mesurée à 60° C dans un essai qui consiste à immerger dans l'émulsion deux électrodes espacées de 2 mm

sur lesquelles on applique un courant alternatif jusqu'à l'obtention du passage du courant entre ces électrodes. Les filtrats ont été déterminés sur filtre-presse HPHT (haute pression, haute température) sous une pression de 35 kg/cm2 à 120°C selon la méthode normalisée de l'Institut Américain des Pétroles (A.P.I.).

Exemple 1

1°) On prépare une composition adjuvante en agitant pendant 60 mn à froid :

- 548 parties d'une coupe d'hydrocarbures paraffiniques désaromatisés (d = 0,79)
- 238 parties d'un mélange Imidazoline/amides (d = 0,92)
- 214 parties d'un mélange primaire à base de composés phénoliques (d = 1,02).

La coupe d'hydrocarbures paraffiniques utilisée a un point d'ébullition compris entre 200 et 250° C (Norme ASTM D86).

Le mélange Imidazoline/amides est constitué de 75 % d'aminoéthylheptadécenylimidazoline, environ 14 % d'heptadécenyldiamides et environ 10 % d'heptadécenylmonoamide, les pourcentages étant exprimés en poids.

Le mélange primaire à base de composés phénoliques comprend 70,2 % de goudron de bois, 20 % de pyrocatechol et 9,8 % d'acides gras en C15-C20. Le goudron de bois est un liquide (à 20°C) contenant moins de 0,1 % de méthylcatechol. Par analyse potentiométrique (neutralisation au N-butylammonium hydroxyde en milieu pyridinique) on mesure une acidité phénolique forte de 0,20 meq/g, une acidité phénolique moyenne de 1,32 meq/g et une acidité phénolique faible de 1,07 meq/g.

La composition adjuvante obtenue est une solution homogène ayant une viscosité BROOKFIELD à 25°C de l'ordre de 400 mPa.s

2°) On incorpore 63 parties de la composition ainsi obtenue dans 650 parties de solvant paraffinique désaromatisé (point d'ébullition compris entre 200 et 250°C - Norme ASTM D86). On ajoute 171 parties d'une saumure saturée de chlorure de sodium sous agitation pour former l'émulsion inverse, puis 20 parties (en poids) de chaux, 26 parties (en poids) de bentone et 250 parties (en poids) de barytine.

Cette boue présente une densité de 1,10 et un rapport huile/eau

de 80/20. Ses propriétés sont les suivantes, après roulage pendant 16 h à 120°C :

| | |
|---|---|
| Tension de rupture | 2.000 V |
| Viscosité apparente | 26,5 m.Pa.s |
| Viscosité plastique | 24 m.Pa.s |
| Yield value | 5 |
| Gel 0 | 2 |
| Gel 10 | 10 |
| Filtrat après 30 mn ($cm^3$) | |
| - huile | 4,8 |
| - eau | 0 |

La toxicité mesurée par la valeur de la concentration léthale CL 50 sur crustacés d'eau douce (daphnies) a montré de très bonnes performances.

Exemple 2

On donne un exemple de composition adjuvante pour boue à filtrat relaché.

On agite pendant 60 mn à froid :

- 308 parties d'une coupe d'hydrocarbures paraffiniques désaromatisés
- 171 parties de mélange Imadozoline/amides
- 90 parties d'un mélange primaire à base de composés phénoliques

Les caractéristiques des composés utilisés sont décrites dans l'exemple 1.

La composition homogène obtenue présente une viscosité à 25° C de 200 mPa.s environ.

On prépare une boue en ajoutant 40 parties de la composition adjuvante ci-dessus à 662 parties d'hydrocarbures paraffiniques désaromatisés puis on forme l'émulsion inverse par addition sous agitation de 171 parties de saumure saturée de Na Cl à laquelle on ajoute 20 parties en poids de chaux, 26 parties en poids de bentone et 250 parties en poids de barytine.

Cette boue a une densité de 1,10 et un rapport huile/eau de 80/20. Après roulage 16 heures à 120°C, on mesure ses propriétés :

| | |
|---|---|
| Tension de rupture | 1.340 V |
| Viscosité apparente | 21 m.Pa.s |

| | |
|---|---|
| Viscosité plastique | 18 m.Pa.s |
| Yield value | 6 |
| Gel 0 | 3 |
| Gel 10 | 5 |
| Filtrat après 30 mn ($cm^3$) | |
| - huile | 17 |
| - eau | 0 |

REVENDICATIONS

1°) Compositions adjuvantes pour fluides de forage caractérisées en ce qu'elles sont constituées d'une phase liquide homogène obtenue en mélangeant 10 à 40 % en poids d'au moins un composé phénolique, 16 à 80 % en poids d'un émulsifiant à base d'imidazoline de formule :

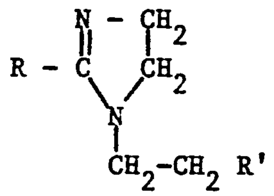 (I)

dans laquelle R représente un radical alkyle ou alcényle linéaire ou ramifié ayant 12 à 30, de préférence 16 à 20 atomes de carbone, ou un radical alicyclique et R' représente le groupe $-NH_2$ ou $-OH$ et 10 à 60 % en poids d'un hydrocarbure paraffinique, le rapport en poids entre le(s) composé(s) phénolique(s) et l'émulsifiant étant compris entre 1/9 et 1,5/1;

2°) Compositions selon la revendication 1 caractérisées en ce que l'émulsifiant est un mélange d'imidazoline de formule I et de mono- et/ou diamides de formules 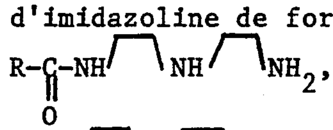,

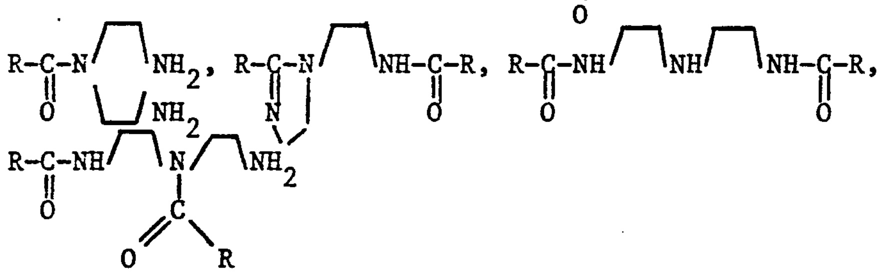

3°) Compositions selon l'une des revendications 1 ou 2 caractérisées en ce que le composé phénolique est choisi dans le groupe des monophénols et des polyphénols, substitués le cas échéant par des groupes alkyle.

4°) Compositions selon l'une des revendications 1 ou 2 caractérisées en ce que le composé phénolique est un résidu de distillation du bois en association avec moins de 20 % de pyrocatechol.

5°) Compositions selon l'une des revendications 1 à 4 caractérisées en ce que l'hydrocarbure paraffinique est choisi dans le groupe des paraffines et isoparaffines liquides et leurs mélanges liquides, des fractions raffinées d'huile minérale et des coupes

d'hydrocarbures désaromatisées.

6°) Compositions selon la revendication 5 caractérisées en ce que l'hydrocarbure contient moins de 5 % de composés aromatiques.

7°) Compositions selon l'une des revendications 1 à 6 caractérisées en ce qu'elles contiennent en outre un réducteur de filtrat choisi parmi les acides gras, les acides résiniques, les savons métalliques de ces acides, le tall-oil, les lécithines.

8°) Fluides de forage à émulsion inverse ayant un rapport Huile/Eau compris entre 95/5 et 60/40, dans lesquels la phase huileuse contient 1 à 10 % en volume d'une composition adjuvante selon l'une des revendications 1 à 7.

9°) Fluides de forage selon la revendication 8 caractérisés en ce que la phase huileuse est constituée d'une huile non polluante.

0134173

Office européen des brevets

# RAPPORT DE RECHERCHE EUROPEENNE

Numéro de la demande

EP 84 40 1626

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,X | FR-A-2 123 225 (RHONE PROGIL)<br>* page 1, lignes 1-9; page 2, lignes 1-23; page 3, lignes 3-16, 23-26; exemples; revendications 1-6 *<br>--- | 1,3,4, 7,8 | C 09 K 7/06 |
| Y | US-A-4 374 737 (D.E. LARSON)<br>* colonne 1, lignes 60-68; colonne 2, lignes 1-50; colonne 3, lignes 23-28; revendications 1-7 *<br>--- | 1,2,5 | |
| Y | FR-A-2 075 400 (WITCO)<br>* page 1, lignes 27-35; page 2, lignes 1-21; page 7, lignes 31-39; page 8, lignes 1-4,15-29 *<br>----- | 1,2,5 | |
| | | | DOMAINES TECHNIQUES RECHERCHES (Int. Cl. 3) |
| | | | C 09 K |

Le présent rapport de recherche a été établi pour toutes les revendications

| Lieu de la recherche | Date d'achèvement de la recherche | Examinateur |
|---|---|---|
| LA HAYE | 20-09-1984 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant